# EUROPÄISCHE PATENTANMELDUNG

(11) **EP 3 996 113 A1**
(43) Veröffentlichungstag der Anmeldung: **11.05.2022**
(21) Anmeldenummer: 20205914.3
(22) Anmeldetag: 05.11.2020
(51) Int. Cl.: H01B 3/40, C08K 5/00, C08K 5/24, C08K 5/36, H01B 3/04

(54) **GLIMMSCHUTZBAND FÜR ROTIERENDE ELEKTRISCHE HOCHSPANNUNGSMASCHINE, VERWENDUNG DAZU UND ELEKTRISCHE MASCHINE**

(71) Anmelder: Siemens Aktiengesellschaft, 80333 München (DE)
(72) Erfinder: Huber, Jürgen, 91058 Erlangen (DE); Lang, Steffen, 91352 Hallerndorf (DE); Nagel, Michael, 91350 Gremsdorf (DE); Rossow, Torsten, 13581 Berlin (DE); Schirm, Dieter, 96149 Breitengüßbach (DE); Übler, Matthias, 92289 Ursensollen (DE)

(57) **Zusammenfassung**

Die Erfindung betrifft ein Glimmschutzband, insbesondere ein reaktives Glimmschutzband, für eine rotierende elektrische Hochspannungsmaschine mit einem durch einen Vakuum-Druck-Imprägnier-"VPI"-Prozess herstellbaren Isolationssystem, wobei das Imprägniermittel zur Imprägnierung des Glimmschutzbandes in dem VPI-Prozess aus Bedenken wegen der Atemwegsensibilisierenden Wirkung der Anhydride, bevorzugt Anhydridfrei vorliegt. Ausgehend von der neuen Generation an Isolationssystemen, die durch Imprägnieren mit Anhydrid-freien Imprägniermitteln herstellbar sind, wird durch die vorliegende Erfindung erstmals ein Glimmschutzband offenbart, in das ein rasch die Homopolymerisation initiierender Band-Beschleuniger deponierbar ist. Der Band-Beschleuniger liegt in Form eines Salzes einer Supersäure vor und ist in einem Glimmschutzband, das als Polymermatrix zumindest teilweise Polyvinylalkohol enthält, bis zu 6 Monate lagerstabil.

## Beschreibung

Die Erfindung betrifft ein Glimmschutzband, insbesondere ein reaktives Glimmschutzband, für eine rotierende elektrische Hochspannungsmaschine mit einem durch Vakuum-Druck-Imprägnier-Prozess (VPI-Prozess) herstellbaren Isolationssystem, wobei das Imprägniermittel im VPI-Prozess aus Bedenken gegenüber der atemwegssensibilisierenden Wirkung der Anhydride, bevorzugt Anhydrid-frei vorliegt. Außerdem betrifft die Erfindung die Verwendung eines derartigen Glimmschutzbandes sowie eine elektrische Maschine mit einem Isolationssystem, das durch die Verwendung des Glimmschutzbandes herstellbar ist.

Bei der Herstellung eines Isolationssystems kommen je nach Bemessungsspannung der rotierenden elektrischen Maschine verschiedene Kombinationen von Komponenten eines Isolationssystems zum Einsatz. Beispielsweise hat man bei Motoren mit ungefähr größer 2kV Bemessungsspannung an der Nutaustrittsstelle eine leitfähige Schicht zur Feldvergleichmäßigung, den Außenglimmschutz, AGS. Ab einer ungefähren Bemessungsspannung von 6kV wird ein AGS in der Regel an den Enden durch einen Endenglimmschutz EGS verstärkt und ab einer Bemessungsspannung von ca. 12kV wird das Isolationssystem an der Hauptisolation noch durch eine Innenpotentialsteuerung IPS verstärkt.

Wegen physiologischer Bedenken gegenüber dem bislang üblichen Einsatz von Anhydrid-haltigen Vernetzern in den Imprägniermitteln des Isolationssystems, insbesondere der durch VPI herstellbaren Isolationssysteme, wird das Anhydrid verstärkt durch Anhydrid-freie Imprägniermittel ersetzt. Diese Substitution zieht eine ganze Reihe von Anpassungsproblemen nach sich, da die Wickelbänder und/oder Glimmschutzbänder, die ihrerseits organische Bindemittel, wie den Bandkleber, polymerbasierte Matrixmaterialien und eben im Fall reaktiver Glimmschutzbänder auch Härtungskatalysatoren umfassen, auf die neu eingesetzten Anhydrid-freien Imprägniermittel abzustimmen sind.

Bislang gibt es keine Formulierung für ein Isolationssystem mit AGS, EGS und/oder IPS, das ein Glimmschutzband, seinerseits etliche empfindliche Komponenten wie den Bandkleber, die Polymermatrix, die Füllstoffe, deren Beschichtungen und ein Anhydrid-freies Imprägniermittel umfasst, welche in einem gängigen VPI-Prozess zu einem brauchbaren Isolationssystem zu verarbeiten ist.

Die Leitschichten des IPS und des AGS bestehen in der Regel aus Ruß- und/oder Graphit-haltigem Verbundwerkstoff auf Basis einer polymeren Matrix. Keine Komponente des Verbundwerkstoffes, weder der Ruß/Graphit, noch die polymere Matrix sind resistent gegenüber Teilentladungen. Trifft eine Teilentladung auf die Leitschicht, reagiert beispielsweise der Ruß mit dem umgebenden Sauerstoff zu CO₂ ab. Gleiches gilt für die polymere Matrix.

Hauptisolation bzw. AGS, EGS und IPS werden in der Regel durch Wicklung von Glimmerband oder Glimmschutzband, das mit einem Imprägniermittel imprägniert wird, gebildet. Dabei umfasst das Glimmerband der Hauptisolation in der Regel einen Barrierewerkstoff, wie Glimmer zur Isolation, während das Glimmschutzband elektrisch leitfähige oder teilleitfähige Füllstoffe, wie Ruß etc. umfasst. Bei Global-VPI im Gegensatz zu Single-VPI werden IPS, AGS und/oder EGS in der Regel als Bänder appliziert, bevorzugt an noch nicht imprägnierten Spulen/Stäben und nachfolgend - besonders bevorzugt - in einem Imprägnierverfahren mit Imprägniermittel imprägniert.

Insbesondere die bislang üblichen, für Anhydrid-haltige Imprägniermittel bestens geeigneten tertiären Amine und/oder organischen Zinksalze können als sogenannte Bandbeschleuniger für die neuen, Anhydrid-freien Imprägniermittel nicht mehr eingesetzt werden, weil diese damit unter den Bedingungen des VPI-Prozesses nur unzureichend vernetzen. Dies resultiert letztlich in unausgehärteten, weichen Bereichen in Teilen des AGS, EGS, IPS und/oder der Hauptisolierung und/oder zu Polymerisaten mit niedriger Glasübergangstemperatur. Eine niedrige Glasübergangstemperatur ist auch lokal zu vermeiden, da diese Bereiche mechanisch und elektrisch ungenügende Eigenschaften aufweisen und zu deutlich verfrühter Degradation führen. Im Betrieb werden diese gering belastbaren Bereiche thermisch und elektrisch rasch degradiert oder zerstört.

Glimmschutzbänder als Teil des Isolationssystems werden bei rotierenden elektrischen Hochspannungsmaschinen eingesetzt. Rotierende Hochspannungsmaschinen sind beispielsweise Motoren oder auch Generatoren in einem Kraftwerk zur Erzeugung elektrischer Energie. Derartige rotierende Hochspannungsmaschinen weisen insbesondere eine Ständerwicklung auf, an die eine besonders hohe Anforderung bezüglich Festigkeit und Zuverlässigkeit gestellt ist. Insbesondere ist das Isolationssystem der Ständerwicklung an der Grenzfläche zwischen der Hauptisolierung und dem Blechpaket, insbesondere bei rotierenden elektrischen Maschinen ab ca. 2kV Bemessungsspannung, der Ständerwicklung durch eine hohe thermische, thermomechanische, dynamische und elektromechanische Betriebsbeanspruchung stark belastet, wodurch das Risiko einer Beschädigung des Isolationssystems der Ständerwicklung durch Teilentladung hoch ist.

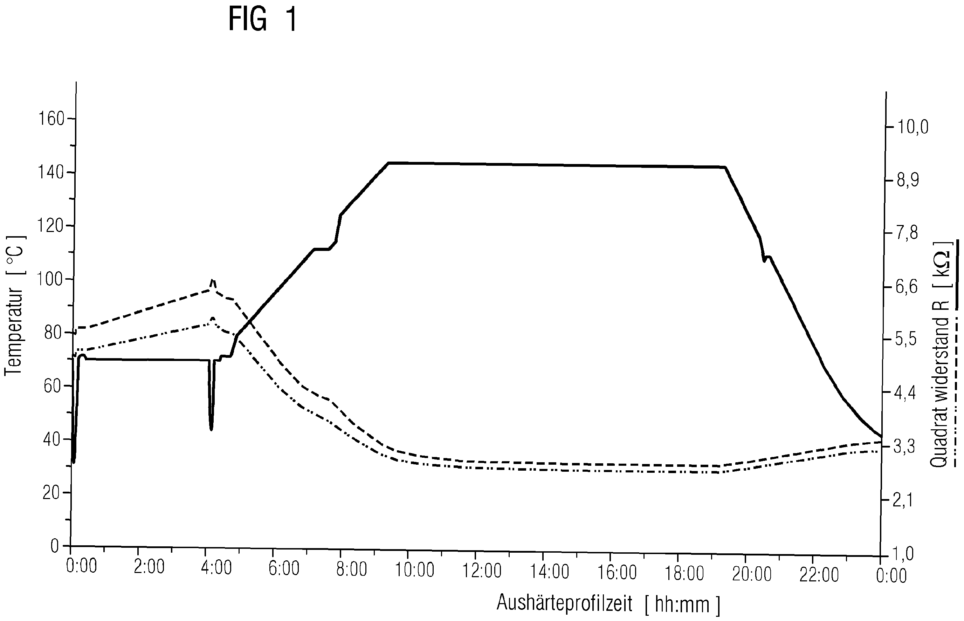

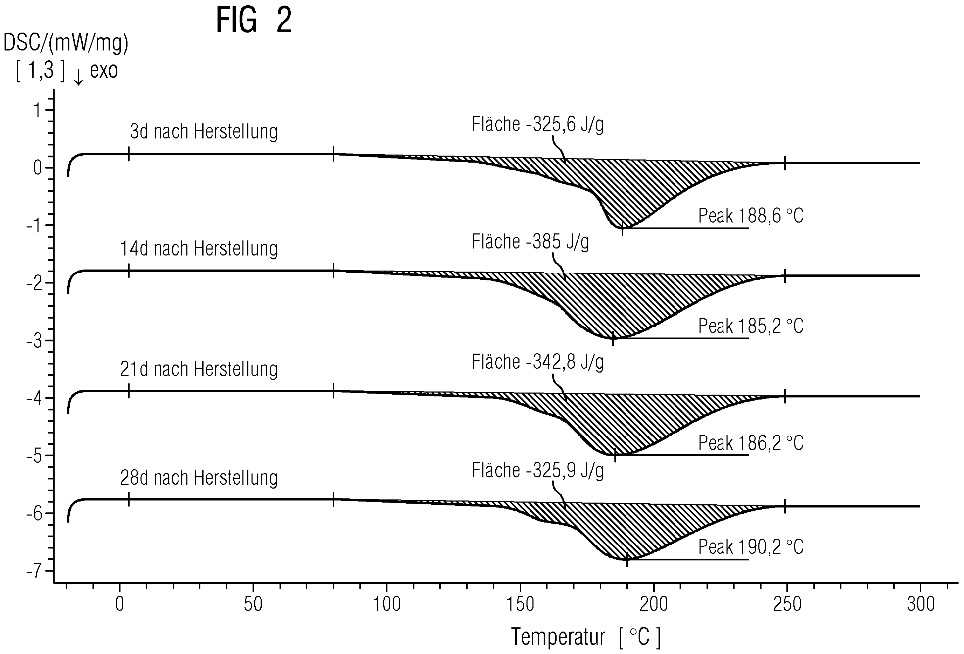

Die Ständerwicklung weist einen mit der Hauptisolierung elektrisch isolierten Leiterverbund auf, der in einer Nut gelagert ist, die in dem Blechpaket angeordnet ist. Beim Betrieb der rotierenden elektrischen Maschine ist der Ständer einer thermischen Wechselbeanspruchung ausgesetzt, wodurch, hervorgerufen durch unterschiedliche Wärmeausdehnungsgeschwindigkeiten und Wärmeleitfähigkeiten des Leiters, der Hauptisolierung und dem Blechpaket, mechanische Spannungen in der Hauptisolierung erzeugt werden. Dadurch bedingt kann ein örtlich begrenztes Ablösen der Hauptisolierung auftreten, wodurch Hohlräume zwischen der Hauptisolierung und dem Blechpaket entstehen, in denen Teilentladungen zünden können. Die Teilentladungen können zu einer Beschädigung der Hauptisolierung führen, was im schlimmsten Fall zu einem Erdschluss zwischen Blechpaket und Leiter führen kann, wodurch die Maschine nicht mehr betreibbar ist. An den Nutaustritten steht herkömmlich der Leiter mit seiner Hauptisolierung vor, dort ist die Grenzfläche zwischen dem Leiter und der Hauptisolierung angeordnet, die eine Gleitanordnung bildet. Dies ist beispielsweise aus der Figur 1 der EP 2362399B1 ersichtlich, wobei der Ausschnitt des dort abgebildeten Turbogeneratorständers der hier behandelten Nut-Austrittsstelle schematisch entspricht.

Die Hauptisolierung der Wicklung gegen das Blechpaket ist ein elektrisch hoch beanspruchtes System. Im Betrieb entstehen hohe Spannungen, welche in dem Isoliervolumen zwischen dem Leiterstab und dem auf Erdpotential liegendem Blechpaket abzubauen sind. An den Kanten der Bleche im Blechpaket entstehen Feldüberhöhungen, die ihrerseits Teilentladungen hervorrufen und schließlich zu einer vorzeitigen Alterung und im schlimmsten Fall zu einer Zerstörung der Isolierung führen.

Die Austrittsstelle der Ständerstäbe/-spulenschenkel aus dem Blechpaket, die Nutaustrittsstelle, ist charakterisiert durch das Aufeinandertreffen zweier Isolierstoffe, dem gasförmigen und dem festen, und dem AGS und/oder IPS oder dem Blechpaket. In diesem Bereich bildet sich eine Grenzschicht zwischen der im Aggregatzustand festen Hauptisolierung und einem gasförmigen Medium, meist Luft oder Wasserstoff, aus. Durch die resultierende dielektrische Trennfläche zwischen der Hauptisolierung und der Luft entsteht eine klassische Gleitanordnung, die neben einer rein radialen Feldkomponente E_{rad}, die senkrecht auf den Leiter steht und die im Bereich des Blechpakets vorkommt, zusätzlich eine tangentiale Feldkomponente Eₜₐₙ, die entlang des Leiters nach AGS-Ende entsteht, hat. Die dadurch tangential beanspruchten Grenzflächen, beispielsweise Hauptisolierung zu Luft, stellen besondere Schwachstellen in einer Isolieranordnung dar.

Aufgrund der geringen elektrischen Festigkeit der Luft kann es schon bei vergleichsweise geringen Spannungen in diesem Bereich des Triplepunktes "Blechpaket-Isolationssystem-Luft", am Ende des Außenglimmschutzes "AGS", zu Teilentladungen, bedingt durch die lokale tangentiale Feldstärkenerhöhung von ca. 0,5kV/mm bei sauberer Oberfläche, kommen, die sich bei weiterer Steigerung der Spannung zu Gleitentladungen entlang der Isolierstoffoberfläche bis zu einem elektrischen Durchschlag, der durch einen Leiter-Erde-Kurzschluss charakterisiert ist, ausweiten können.

Um diese elektrischen Gleitentladungen zu unterdrücken, wird bei elektrischen rotierenden Maschinen zusätzlich zum Außenglimmschutz "AGS" ab einer Bemessungsspannung von 6kV eine resistiv-kapazitive Feldsteuerung, in Form eines Endenglimmschutzes "EGS", an den AGS angebunden. Bei der Berechnung und Auslegung eines Endenglimmschutzes ist zu beachten, dass die höchste elektro-thermische Belastung des Systems nicht bei Betriebsspannung, sondern vielmehr bei der Kontrolle des Isoliersystems mit erhöhter Prüfspannung erfolgt. Durch Bildung von Gleitentladungen an der Oberfläche wird der Isolierstoff langfristig zerstört. Der Endenglimmschutz ist, genauso wie der Außenglimmschutz, eine resistive Beschichtung direkt auf der Oberfläche der Hauptisolation. Im Gegensatz zum "AGS", dem Außenglimmschutz, der einen Oberflächenwiderstand von etwa 1000 - 10.000 Ohm hat, zeigt der "EGS", der Endenglimmschutz einen deutlich höheren elektrischen Oberflächenwiderstand, der nichtlinear ausgestaltet ist und bei einer Feldstärke von 100V/mm bei etwa 5 x 10⁹ Ohm liegt. Ganz generell kann der relevante Widerstandsbereich des EGS mit 2x10⁸ Ohm bis 1x10¹³ Ohm angegeben werden.

Insbesondere kann es durch Erwärmung, elektrische Erosion und chemische Degradation zur Zerstörung des EGS kommen und damit zu einer Beschädigung des Isolationssystems und schließlich zum Überschlag als Folge der Zerstörung des Endenglimmschutzes kommen. Durch lokale Wärmeentwicklung kann es aufgrund einer Arbeitspunktverschiebung zusätzlich zur Störung der Funktionsweise des Isoliersystems und zu einem Ansteigen der dielektrischen Verluste kommen.

Der AGS hat einen gewissen Quadratwiderstand, der einen bestimmten unteren und oberen Grenzwert nicht unter- respektive überschreiten darf. Bei Unterschreitung des Grenzwertes können hohe induzierte Kreisströme, welche sich über die Enden des Blechpakets und dem Außenglimmschutz schließen, zu stromstarken Lichtbögen zwischen zwei Blechen im Blechpaket führen, dadurch gibt es hohe elektrische Verluste. Bei zu hohem Widerstand kann es wiederum zu Hochspannungsfunkenerosion kommen, wobei dann der AGS nicht mehr wie eine Feldvergleichmäßigung, sondern wie eine Isolation wirkt. Idealerweise hat ein Außenglimmschutz eine ausgeprägte Anisotropie im Widerstandsverhalten, der Widerstand in tangentialer, also axialer Richtung sollte hoch und in radialer Richtung gering sein.

In der Praxis ist diese gewünschte Eigenschaft des AGS aber nicht realisierbar, so dass bislang der AGS in tangentialer Richtung stets niederohmiger ist als in radialer Richtung. Diese Phänomene sind auch in einschlägiger Fachliteratur nachzulesen, beispielsweise in "Hochspannungstechnik" von A. Küchler, Springer Verlag, Vol 15, 2009 ISBN 3-540-78412-8 und "Design Dependent Slot Discharge and Vibration Sparking on High Voltage Windings" von M. Liese und M. Brown, IEEE Trans DIE, August 2008, pp 927-932.

Aufgabe der vorliegenden Erfindung ist es daher, ein Glimmschutzband zur Weiterverarbeitung im VPI-Verfahren bereitzustellen, ein Trägerband, zumindest einen Band-beschleuniger für das Imprägnierharz und zumindest ein polymeres Matrixmaterial mit einem elektrisch leitfähigen, gegebenenfalls beschichteten Füllstoff umfassend, wobei der in dem Glimmschutzband enthaltene Bandbeschleuniger geeignet ist, auf ein Anhydrid-freies Imprägniermittel, insbesondere auf Epoxidharzbasis, im VPI-Prozess härtungsbeschleunigend zu wirken.

Die Lösung dieser Aufgabe wird durch den Gegenstand der vorliegenden Erfindung, wie er in der Beschreibung, den Ansprüchen und den Figuren offenbart ist, bereitgestellt.

Dementsprechend ist Gegenstand der vorliegenden Erfindung ein Glimmschutzband für die Weiterverarbeitung zu einem Isolationssystem mit Wicklung und Potentialsteuerung durch Außenglimmschutz und/oder Innenpotentialsteuerung und/oder Endenglimmschutz, das Isolationssystem durch Imprägnieren der Wicklung mit einem Anhydrid-freien und Harz-basierten Imprägniermittel bei 45°C bis 85°C und unter Vakuum, beispielsweise mittels VPI-Imprägnierung, herstellbar, wobei das Glimmschutzband zumindest ein Trägerband einen elektrisch leitfähigem oder teilleitfähigem Füllstoff in einer Polymermatrix und zumindest einen Band-Beschleuniger geeignet zur Härtung und/oder Gelierung des Imprägniermittels umfasst, dadurch gekennzeichnet, dass die Polymermatrix zumindest einen Polyvinylalkohol und/oder ein Polyvinylalkohol-Copolymerisat enthält und dass der zumindest eine Band-Beschleuniger ausgewählt ist aus der Gruppe der Supersäuresalze, wobei er zur Beschleunigung einer kationischen Homopolymerisation des Harz-basierten Anhydrid-freien Imprägniermittels geeignet ist.

Die Basis des Harz-basierten Imprägniermittels ist bevorzugt ein Epoxidharz, insbesondere auch eine Epoxidharzmischung, beispielsweise eine ein oder mehrere cycloaliphatische Epoxidharze umfassende Epoxidharzmischung. In dieser Mischung kann beispielsweise auch Siloxan enthalten sein, so dass bei Aushärtung des Imprägniermittels ein Duromer mit -O-SiR₂-O-Einheiten umfassendem Rückgrat erhalten wird.

Nach einer vorteilhaften Ausführungsform der Erfindung ist das Imprägniermittel ein insbesondere Phthalsäureanhydridrespektive Phthalsäureanhydrid-Derivat-freies Harz oder eine Harzmischung auf Epoxidbasis, bevorzugt zumindest ein cycloaliphatisches Epoxidharz und ein Epoxidharz auf Bisphenol-A- und/oder Bisphenol-F-Diglycidylether- und/oder Epoxynovolak-Basis umfassend. Beispielsweise liegt eine Imprägnierharzmischung auf der Basis von cycloaliphatischem Epoxidharz und Bisphenol-A-Diglycidylether im Mischungsverhältnis im Bereich von 50:50 bis 90:10, insbesondere im Mischungsverhältnis von 80:20 (m/m) vor.

Beispielsweise umfasst die Polymermatrix den Bandkleber und - zumindest teilweise - den darin gelösten und/oder feinstverteilten Bandbeschleuniger, auch "Band-Katalysator" genannt. Der Bandbeschleuniger dient zur Gelierung eines dünnflüssigen Imprägnierharzes, das beispielsweise in einer Vakuum-Druck-Imprägnierung (VPI) auf das Glimmschutzband und die Hauptisolation der Ständerwicklung einwirkt. Dies passiert üblicherweise bei erhöhten Temperaturen, 45°C bis 85°C. Nach dem Imprägnieren werden die Ständerwicklungen im Statorblechpaket noch thermisch nach-gehärtet.

Der zumindest eine Band-Beschleuniger liegt vorzugsweise in der polymeren Matrix mit den Füllstoffen vor. Während des Imprägnierens vermischt sich dieser zumindest teilweise mit dem Imprägniermittel und/oder kann in das Imprägniermittel zumindest teilweise migrieren und dient so zur Gelierung des Imprägniermittels vor dessen Aushärtung im nachfolgenden Temperschritt des Imprägnierverfahrens.

Nach einer Ausführungsform der Erfindung liegt der Bandbeschleuniger, der beispielsweise und vorzugsweise in Form eines Supersäuren-Salzes vorliegt, in der Polymermatrix, respektive dem Bandkleber, also zumindest einen Polyvinylalkohol umfassend, feinstverteilt und/oder gelöst vor.

Wegen der geforderten und erwünschten Lagerstabilität des Glimmschutzbandes ist es vorteilhaft, wenn die im Glimmschutzband vorhandene Bandbeschleuniger in Form einer Supersäure und/oder eines Supersäuresalzes erst bei Kontakt mit dem Imprägniermittel und erhöhten Temperaturen von 45°C bis 85°C reagiert. Eine vorherige Reaktion mit der polymeren Matrix ist unerwünscht, weil der Bandbeschleuniger dann "aufgebraucht" wäre und das Imprägniermittel nicht mehr anhärten, gelieren respektive aushärten könnte. Deshalb ist ein kritischer Punkt der vorliegenden Erfindung der, dass der Bandbeschleuniger zwar in Form der extrem reaktiven Supersäure und/oder eines Derivats davon vorliegt, mit der Polymermatrix des Glimmschutzbandes aber unter Bedingungen bis zu 70°C nicht oder in nicht nennenswerter Menge reagiert.

Der Beschleuniger im Trägerband ist beispielsweise in einer Menge im Bereich von 0,1 g/m² bis 15 g/m², insbesondere von 0,25 g/m² bis 10 g/m², bevorzugt in einer Menge von 0.5 g/m² bis 5 g/m² enthalten.

Dabei können die eingelagerten Band-Beschleuniger und Bandbeschleunigerkonzentrationen in den Komponenten des Isolationssystems gleich oder ungleich sein.

Die "Komponenten des Isolationssystems" die hier vor allem betroffen sind, sind beispielsweise
- die Wicklung der Hauptisolation - ohne leitfähige oder teilleitfähige Füllstoffe, da die Hauptisolation elektrisch isolierend ist,
- die Wicklung der IPS, des AGS und/oder des EGS, die abgestufte elektrische Leitfähigkeit oder Teilleitfähigkeit haben, siehe oben.

Um Teilentladungen zu vermeiden, kann die Hauptisolierung von Wicklungsstäben /-Spulen mit einer inneren und einer äußeren Leitschicht gegen Hohlräume und Ablösungen abgeschirmt werden, eben durch Innenpotentialsteuerung IPS und AGS, wie oben erläutert. An den AGS anschließend kann ein EGS aufgebracht werden.

Aus der EP 2362399 und aus der DE 19839285 C1 sind Glimmschutzbänder bekannt, in denen ein planarer Füllstoff gebunden in einer polymeren Matrix vorliegt. Der beschriebene planare Füllstoff besteht aus einem Glimmersubstrat, das mit dotiertem Metalloxid, beispielsweise Titanoxid und/oder Zinnoxid, beschichtet ist. Dieser Füllstoff ist insbesondere resistenter gegenüber Teilentladungen als die Kohlenstoffbasierten Füllstoffe.

Ganz grundsätzlich ist bei den mit planaren Füllstoffen gefüllten polymeren Matrizen der elektrische Widerstand in Bandrichtung deutlich geringer als der senkrecht durchs Band, was wiederum die elektrische Leitfähigkeit in radialer Richtung vermindert. Durch Zugabe von runden Füllstoffen, bei denen als Substrat Quarzgut oder Quarzmehl dient, das wiederum ebenfalls mit dotiertem Metalloxid beschichtet wurde, kann der radiale Widerstand reduziert werden.

Der elektrisch leitfähige und/oder teilleitfähige Füllstoff hat nach einer bevorzugten Ausführungsform zumindest eine Komponente, ausgewählt aus der Gruppe enthaltend Ruß, Graphit, Carbonnanotubes - CNTs-, Antimon dotiertes Zinnoxid, Siliziumkarbid und/oder Aluminium dotiertes Siliziumkarbid, wobei die jeweilige Komponente dotiert oder undotiert, beschichtet oder unbeschichtet, dotiert beschichtet oder undotiert beschichtet vorliegen kann.

Zur Reduzierung der Feldstärkenüberhöhung im Bereich des Endes des Außenglimmschutzes wird eine kapazitiv-resistive Feldsteuerung eingesetzt. Die kapazitive Steuerung wird durch die Hauptisolierung realisiert, während die resistive Steuerung durch den Endenglimmschutz (EGS) stattfindet. Hierbei handelt es sich um leitfähige Oberflächenbeläge, die einen quadratischen Widerstand von ca. 10⁸ bis 10¹⁰ Ohm bei einer Feldstärke von 100 V/mm haben. Mit Hilfe der starken Nichtlinearität des Widerstandes der eingesetzten Materialien im EGS wird versucht, das elektrische Feld aus den Bereichen hoher Feldstärken zu verdrängen. Dieses hat in der Verringerung des spezifischen Widerstands mit steigender elektrischer Feldstärke ihre Ursache.

Die ohmschen Oberflächenbeläge können entweder durch Anstriche aus trocknenden und/oder härtbaren Harzen, welche unmittelbar auf die Isolierstoffoberfläche aufgebracht werden und/oder zusammen mit der Herstellung der gewickelten Hauptisolation, die aber dann schon vor der Herstellung respektive der Imprägnierung der Hauptisolation als Bänder aufgewickelt werden, entweder in Form eines Prepregs oder eines bereits ausgehärteten, porösen Bandes, hergestellt werden.

Die Hauptisolierung der Wicklung wird dann mit einem Imprägnierharz und beispielsweise durch einen damit ausgeführten Vakuum-Druck-Imprägnier-Prozess (VPI-Prozess) imprägniert. Dabei kommen herkömmlich, also nach dem Stand der Technik, vor allem Epoxidharze und/oder Epoxidharz-Gemische mit Anhydriden als Härtern zum Einsatz. Wegen der atemwegssensibilisierenden Wirkung und entsprechenden Bedenken gegen die uneingeschränkte Verwendung Anhydriden als Härter, insbesondere von Phthalsäureanhydriden, respektive und/oder auch Phthalsäureanhydrid-Derivaten werden vorliegend nur Anhydrid-freie, insbesondere Phthalsäureanhydrid- bzw. Phthalsäureanhydrid-Derivat-freie Imprägniermittel eingesetzt. Aus der WO2016/124387 ist beispielsweise ein Isoliersystem auf Basis eines Epoxidharzes mit einem Anhydrid-freien Imprägniermittel, das homopolymerisierbar ist, bekannt.

Ein reaktives Glimmschutzband umfasst dementsprechend auf einem flexiblen Träger wie Folie, Vlies und/oder Gewebe, das hier als "Trägerband" bezeichnet wird, ein aufgebrachtes elektrisch leitfähiges und/oder halb- beziehungsweise teilleitfähiges Material, das mit dem Trägerband, miteinander und gegebenenfalls mit einer abschließenden Decklage und/oder eines weiteren Lage mittels eines Bandklebers, der die Polymermatrix darstellt und/oder die Polymermatrix umfasst, verbunden ist.

Als elektrisch leitfähiges und/oder halb- beziehungsweise teilleitfähiges Material werden z.B. Füllstoffe auf Kohlenstoffbasis und/oder keramisches, insbesondere Glimmerbasiertes, Material mit teilleitfähiger, insbesondere durch Dotierung erzielter leitfähiger Beschichtung, beispielsweise aus Titanoxid und/oder Zinnoxid, und/oder mit und ohne Aluminium dotiertem Silizumkarbid bezeichnet. Andererseits können alternativ dazu oder ergänzend die genannten elektrisch leitfähigen und/oder halb- beziehungsweise teilleitfähigen Materialien wie dotiertes Titanoxid und/oder Zinnoxid, und/oder mit und ohne Aluminium dotiertes Silizumkarbid auch ohne Substrat - wie beispielsweise Glimmer - als Füllstoff vorliegen.

Das Band, das zur Herstellung der Außenglimmschutzwicklung eingesetzt wird, umfasst zumindest ein Bindemittel, in der Regel ein Polymer und eine Mischung aus planaren und/oder globularen und/oder tubularen elektrisch leitfähigen und/oder teilleitfähigen Füllstoffen, die gegebenenfalls eine u.U. dotierte Beschichtung aufweisen.

Nach einer vorteilhaften Ausführungsform der Erfindung umfasst die polymere Matrix mehrere Polyvinylalkohole. Grundsätzlich sind Polyvinylalkohole gemäß der Erfindung als Polymermatrix oder Teil der Polymermatrix des Glimmschutzbandes einsetzbar, jedoch beispielsweise seien im Folgenden einige besonders geeignete Polyvinylalkohole, die allein oder in Kombination einsetzbar sind, genannt.

Polyvinylalkohol mit der CAS Nummer 9002-89-5 und der Summenformel (-C₂H₄O-)ₙ der Wiederholeinheit, ist ein Thermoplast und liegt handelsüblich als ein kristalliner, weiß bis gelblicher, wasserlöslicher Kunststoff vor.

Im Gegensatz zu den meisten Vinylpolymeren kann Polyvinylalkohol nicht durch einfache Polymerisation des entsprechenden Monomers hergestellt werden. Das dafür notwendige Monomer Ethenol existiert lediglich in seiner tautomeren Form als Acetaldehyd. Polyvinylalkohole werden durch Umesterung und/oder durch alkalische Verseifung von Polyvinylacetat gewonnen. Die Hydrolyse ist gut steuerbar. Es gibt Polyvinylalkohol-Copolymerisate und verschiedene Derivate, bei denen ein Teil der Hydroxylgruppen durch chemisch ähnliche reagierende Gruppen wie Siloxane ersetzt sind.

Geeignete Polyvinylalkohole besitzen beispielsweise einen Hydrolysegrad von größer 70 mol%. Vorteilhafter Weise sind dabei wenige oder mehrere Hydroxylgruppen durch Silizium haltige Verbindungen substituiert.

Nach einer vorteilhaften Ausführungsform der Erfindung umfasst die polymere Matrix im Band Polyvinylalkohol mit quervernetzten Anteilen. In welchem Grad?

Nach einer vorteilhaften Ausführungsform umfasst die polymere Matrix im Band einen oder mehrere mit einem Aldehydmodifizierte und/oder mit Melamin quervernetzte Polyvinylalkohol(e).

Nach einer vorteilhaften Ausführungsform der Erfindung umfasst die polymere Matrix zumindest ein polymeres Bindemittel, das ein Polyvinylalkohol ist, der einen Hydrolysegrad von mindestens 70 mol%, insbesondere mindestens 85 mol% und bevorzugt von mindestens 87 mol% oder mehr aufweist.

Nach einer weiteren vorteilhaften Ausführungsform der Erfindung umfasst die polymere Matrix zumindest einen Polyvinylalkohol, bei dem die Hydroxylgruppen des Polyvinylalkohols zumindest teilweise durch Siloxan- und/oder Silanolgruppen substituiert sind.

Zum Nachweis der Bestandteile eines Glimmschutzbandes nach einer Ausführungsform der Erfindung, insbesondere auch in einem fertigen Isolationssystem, sind Untersuchungsmethoden wie IR-, UV-, und/oder VIS-spektroskopische Methoden und/oder rasterelektronische Untersuchungsmethoden, unter anderem auch mit Röntgenspektroskopie, beispielsweise EDX, geeignet.

Nach einer vorteilhaften Ausführungsform der Erfindung umfasst der elektrisch leitfähige Füllstoff hauptsächlich Kohlenstoff-basierte Komponenten wie beispielsweise eine Kohlenstoffmodifikation - bevorzugt Ruß, Graphit und/oder Carbon Nanotubes.

Nach einer weiteren vorteilhaften Ausführungsform der Erfindung umfasst der elektrisch leitfähige Füllstoff ein Siliziumcarbid, undotiert und/oder dotiertes Siliziumcarbid.

Nach einer weiteren vorteilhaften Ausführungsform der Erfindung umfasst der elektrisch leitfähige Füllstoff Partikel, die zumindest zum Teil aus Metalloxid, insbesondere einem Mischoxid, sind.

Als Metalloxid wird vorliegend eine Verbindung zwischen einem Metall und Sauerstoff bezeichnet, wobei der Sauerstoff in der Verbindung formell, also vereinfacht, 2-fach negativ geladen ist. Grundsätzlich ist der Sauerstoff in der Verbindung der elektronegative Partner. Daher die Bezeichnung "-oxid".

Als Mischoxid - kurz MOX - wird entsprechend eine Substanz bezeichnet, in der mehr als ein Metall-Kation in einer oxidischen Verbindung vorliegt, also beispielsweise Titan-Aluminium-Oxid oder Eisen-Nickel-Oxid oder ähnliches.

Nach einer vorteilhaften Ausführungsform der Erfindung wird ein Füllstoff eingesetzt, der eine Beschichtung aus einem dotierten Zinnoxid und/oder einem dotierten Titanoxid hat und/oder der aus einem dotierten Zinnoxid und/oder Titanoxid besteht.

Die Füllstoffpartikel können als Hohlkörper, als massive Teilchen, als beschichtete Teilchen und/oder als Core-Shell-Partikel vorliegen.

Auf dem Trägerband ist zumindest eine Fraktion vorzugsweise aber nicht notwendigerweise ausschließlich plättchenförmiger Partikel appliziert, die durch eine Polymermatrix, also das Bindemittel zusammengehalten werden und somit das Glimmschutzband bilden. Zur Einstellung des elektrischen Widerstands kann es dabei vorteilhaft sein, die Fraktion an plättchenförmigen Füllstoffpartikeln mit kugelförmigen, also globularen Füllstoffpartikeln zu ergänzen.

Nach einer vorteilhaften Ausführungsform der Erfindung hat das Glimmschutzband ein Flächengewicht von < 150 g/m², bevorzugt kleiner 100 g/m².

Nach einer vorteilhaften Ausführungsform umfasst das Trägerband Verstärkungsfasern, beispielsweise in Form eines Gewebes und/oder eines Faserverbunds, in und/oder auf den die polymere Matrix mit dem elektrisch leitfähigen Füllstoff eingebracht ist und/oder mit dem sie durch das Bindemittel verklebt ist.

Das Trägerband besitzt bevorzugt ein Flächengewicht von 30 - 60 g/m².

Diese Verstärkungsfasern sind beispielsweise Glasfasern und/oder Polyethylenterephthalat - PET-Fasern.

Nach einer vorteilhaften Ausführungsform ist das Trägerband mit einer Primerung beschichtet. Dabei ist es insbesondere vorteilhaft, wenn das Trägerband mit einer Primerung von bis zu 5 g/m² beschichtet ist.

Insbesondere hat sich als vorteilhaft erwiesen, wenn die Primerung des Trägerbandes Polyvinylalkohol, Epoxid- und/oder Aminfunktionalitäten umfasst.

Als Primerung wird vorliegend eine grundierende Beschichtung bezeichnet, durch die die Verstärkungsfasern und/oder das Trägerband, -gewebe in ihrer Schnittfestigkeit verbessert werden und für eine Benetzung und Anbindung mit der polymeren Matrix vorbereitet werden.

Nach einer vorteilhaften Ausführungsform der Erfindung liegt die Menge der Beschichtung des Trägerbandes mit der polymeren Matrix, die die zumindest eine Fraktion an elektrisch leitfähigem Füllstoff und/oder gegebenenfalls auch den zumindest einen Band-Beschleuniger enthält im Bereich von 20 g/m² bis 100 g/m², insbesondere im Bereich von 20 g/m² bis 60 g/m², besonders bevorzugt im Bereich von 30 g/m² bis 45 g/m², vor.

Nach der Erfindung wird das Glimmschutzband zur Herstellung eines Außenglimmschutzsystems und/oder eines Innenpotentialsteuerungssystems und/oder eines Endenglimmschutzsystems eingesetzt.

Dabei ist es vorteilhaft, wenn der Quadrat- und/oder Flächenwiderstand eines durch ein Glimmschutzband gemäß der vorliegenden Erfindung hergestellten Außenglimmschutzsystems und/oder eines Innenpotentialsteuerungssystems im Bereich von 0,01 kOhm bis 100 kOhm, gemessen bei einer Feldstärke von 1 V/mm liegt.

Insbesondere liegen die Quadrat- und/oder Flächenwiderstandswerte einer derartigen Innenpotentialsteuerung bevorzugt im Bereich von 0,01 kOhm bis 10 kOhm, bevorzugt im Bereich von 0,01 bis 5 kOhm und besonders bevorzugt im Bereich von 0,05 bis 1 kOhm und/oder die Quadratwiderstandswerte eines derartigen Außenglimmschutzes im Bereich von 0,1 bis 100 kOhm, insbesondere von 0,1 kOhm bis 50 kOhm und besonders bevorzugt im Bereich von 1 kOhm bis 10 kOhm, jeweils gemessen bei einer Feldstärke von 1 V/mm.

Bei der Herstellung eines Endenglimmschutzes mittels eines Glimmschutzbandes gemäß der vorliegenden Erfindung ist es vorteilhaft, wenn ein Flächenwiderstand im Bereich von 1x10⁸ bis 1 x 10¹² Ohm, insbesondere im Bereich von 1x10⁸ bis 1x10¹² Ohm bei einer Feldstärke von 100 V/mm vorliegt.

Die Erfindung betrifft ein Glimmschutzband für eine elektrische Hochspannungsmaschine mit Anhydrid-freien, insbesondere Phthalsäureanhydridderivatfreien Epoxidharzen. Das hier erstmals vorgestellte Glimmschutzband ist mit seinen Komponenten, insbesondere der verbindenden polymeren Matrix und dem eingelagerten kationischen Band-Beschleuniger auf die neuen, beispielsweise auch Alkyl-Phthalsäureanhydridderivat-freien VPI-Imprägnierharze auf Epoxidharzbasis eingestellt.

Bevorzugt ist der Bandbeschleuniger eine ionogen aufgebaute Verbindung aus einem oder mehreren Sulfonium-haltigen Kation(en) mit einem oder mehreren Anionen, insbesondere komplex aufgebauten Anionen, wie beispielsweise Hexafluoroantimonat-Anion(en), jeweils geeignet für den Einsatz in einem VPI-Prozess zur Herstellung eines Isolationssystems mit einem Anhydrid-freien Imprägniermittel..

Der Bandbeschleuniger ist ein kationischer Bandbeschleuniger und ist daher bevorzugt ionogen aufgebaut. Insbesondere hat der Bandbeschleuniger ein Sulfonium-haltiges Kation.

Beispielsweise ist ein geeigneter kationischer Bandbeschleuniger eine chemische Verbindung, die unter eine der Strukturformeln I, II oder III fällt:

### Supersäuren-Salz mit Sulfonium-Kation Struktur I

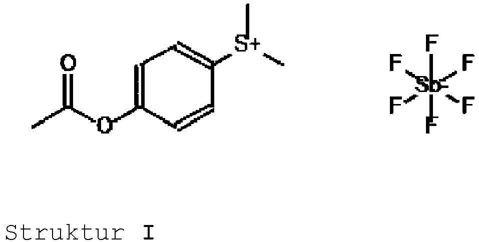

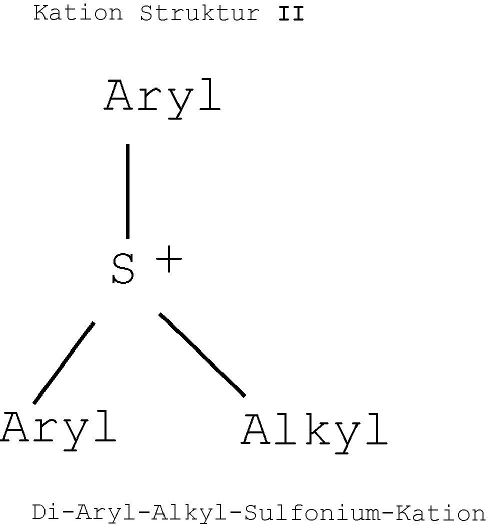

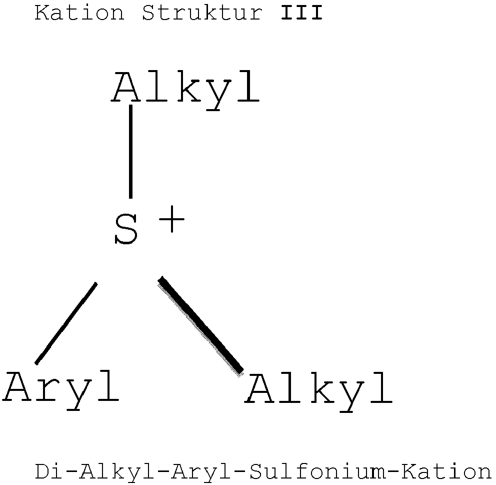

Die hier gezeigten Sulfonium-Kationen **I, II** und **III** bilden mit komplexen Anionen wie BF₄⁻, PF₆⁻, SbF₆⁻, AsF₆⁻, SbF₅(OH)⁻, AsF₅(OH)⁻, Al[OC(CF₃)₃]₄⁻ die entsprechenden Supersäure-Salze, die vorliegend als Band-Beschleuniger einsetzbar sind.

Als "Supersäuren" werden Säuren bezeichnet, die stärker als konzentrierte 100-prozentige Schwefelsäure mit dem pKs-Wert = -3, sind. Beispiele sind Fluorsulfonsäure, Fluor-Antimonsäure, per-halogenierte Carborane und andere.

Dabei zeigt die Strukturformel "Struktur **I"** den kationischen Teil eines Bandbeschleunigers gemäß einem bevorzugten Ausführungsbeispiel der vorliegenden Erfindung.

Als "kationischer Bandbeschleuniger" wird ein Bandbeschleuniger bezeichnet, der ionogen aufgebaut ist und dessen Kation in einem flüssigen Imprägniermittel die kationische Polymerisation, insbesondere die kationische Homopolymerisation eines vorgelegten Imprägnierharzes initiiert.

Als "ionogen" aufgebaute Verbindung werden heteropolare Verbindungen bezeichnet, deren chemische Reaktivität vom Vorliegen eines Kations und eines Anions in der Verbindung geprägt sind. Klassische "ionogen" vorliegende Verbindungen sind Salze. Aber auch komplexe Strukturen mit kationischem und anionischem Charakter werden vorliegend als "ionogen" aufgebaute Verbindungen bezeichnet.

Ein "Sulfonium-haltiges Kation" ist ein Kation, das im Molekül neben dem Anion oder den Anionen eine Einheit umfasst, die durch die einfach positiv geladenen Strukturen **II** oder **III** oder durch die Summenformel [SR₃]⁺ zu beschreiben ist.

Als "Alkyl-Aryl-Sulfonium" oder "Di-Alkyl-Aryl-Sulfonium" wird dabei ein Sulfonium-haltiges Kation bezeichnet, bei dem ein oder zwei der drei Reste **"R"** am Schwefel-Atom im Sulfonium-Kation Alkylgruppen sind. Alkylgruppen sind Teile eines Moleküls, die aus miteinander verbundenen Kohlenstoff- und Wasserstoff-Atomen bestehen. Im Sinne der Erfindung sind bevorzugte Alkylreste solche mit 1 bis 12 C-Atomen, die verzweigt oder linear vorliegen können. Die Alkylgruppen sind dabei einwertig mit dem zentralen Schwefelatom verbunden.

Gemäß der Erfindung können bei einem Di-Alkyl-Aryl-Sulfonium-Kation ein oder zwei Alkylreste vorliegen, die ihrerseits gleich oder verschieden sein können.

Als "Aryl-Alkyl-Sulfonium oder Di-Aryl-Alkyl-Sulfonium" wird dabei ein Sulfonium-haltiges Kation bezeichnet, bei dem ein oder zwei der drei Reste **"R"** am Schwefel-Atom im Sulfonium-Kation Arylgruppen sind. Arylgruppen sind Teile eines Moleküls, die einwertig bzw. per Einfachbindung an dem Kohlenstoff-Gerüst, respektive am Schwefelatom, hängen und zumindest einen aromatischen Kern, der teilweise oder ganz - substituiert oder - unsubstituiert, sein kann, haben.

Gemäß der Erfindung können bei einem Aryl-Alkyl-Sulfonium-Kation ein oder zwei Arylreste vorliegen, die ihrerseits gleich oder verschieden sein können.

Der dritte Rest kann dabei beliebig, also auch eine Alkylgruppe oder eine Arylgruppe, ganz oder teilweise substituiert oder nicht, sein.

Eine Arylgruppe ist ein organisch-chemischer Rest mit einem aromatischen Grundgerüst. Es ist die Bezeichnung für eine einwertige Atomgruppe, die sich von aromatischen Kohlenwasserstoffen durch Entzug eines an den Ring gebundenen Wasserstoffatoms ableiten. Die meisten Arylgruppen leiten sich vom Benzol ab, die einfachste Arylgruppe ist die Phenylgruppe.

Nach einer bevorzugten Ausführungsform liegt im Sulfonium-Kation zumindest eine Arylgruppe vor.

Dabei ist bevorzugt, wenn zumindest eine einkernige Arylgruppe, also beispielsweise eine Arylgruppe mit einer von Benzol abgeleiteten Aryl-Struktur, wie beispielsweise Phenyl- oder Benzyl- vorliegt.

Insbesondere ist auch bevorzugt, wenn an einem einkernigen aromatischen Rest der Arylgruppe des Sulfonium-haltigen Kations zumindest eine Substitution vorliegt, also ein Wasserstoff am aromatischen Kern ersetzt ist, beispielsweise durch eine funktionelle Gruppe oder eine Alkylgruppe.

Die funktionelle Gruppe kann dabei mit oder ohne Heteroatom wie Sauerstoff, Stickstoff, Schwefel, Phosphor vorliegen.

Besonders bevorzugt ist eine Arylgruppe, bei dem ein Wasserstoff am aromatischen Kern durch eine Acetyloxy-gruppe, ersetzt ist.

Des Weiteren ist besonders bevorzugt, dass als Bandbeschleuniger ein Sulfonium-haltiges Kation kombiniert mit einem Hexafluoroantimonat-Anion vorliegt.

Der Glimmschutz-Bandbeschleuniger kann als Mischung zumindest zweier kationischer Bandbeschleuniger, die jeweils ein anderes Sulfonium-Kation haben, vorliegen. Die Anionen können gleich oder verschieden sein, insbesondere als Anion Hexafluoro-Antimonat.

Der Glimmschutz-Bandbeschleuniger, egal ob als EinzelVerbindung oder als Mischung vorliegend, hat bevorzugt einen Schmelzpunkt im Bereich von 145°C bis 165°C, insbesondere bevorzugt im Bereich von 150°C bis 160°C.

Außerdem ist Gegenstand der Erfindung die Verwendung des reaktiven Glimmschutzbandes zur Herstellung eines Anhydrid-freien Isolationssystems durch Imprägnieren des festen Glimmschutzbandes mit einem Imprägniermittel, wobei das Imprägniermittel ein aromatisches und/oder cyclo-aliphatisches Imprägnierharz umfasst, das Anhydrid-frei und Epoxidgruppenhaltig ist.

Als Anionen des kationischen Bandbeschleunigers eignen sich insbesondere komplex aufgebaute Anionen, wie das Hexafluoroantimonat-Anion, so dass als Bandbeschleuniger beispielsweise das 4-Acetyloxyphenyl-dimethylsulfonium-hexafluoroantimonat - CAS-Nr.135691-31-5 - Struktur I, vorliegt.

Im Folgenden wird die Erfindung anhand eines Anwendungsbeispiels, das eine Ausführungsform der Erfindung beschreibt, näher erläutert:
Durch Verwendung des in Struktur I genannten Sulphoniumsupersäurederivats 4-Acetyloxyphenyl-dimethylsulfonium-hexafluoroantimonat in wässriger Abmischung mit bevorzugterweise silanolgruppenmodifiziertem Polyvinylalkohol und plättchenförmigen, mit Zinnoxid teilleitfähig eingestelltem, beispielsweise dotiertem Füllstoff, sowie organischem Lösemittel, wie z.B. 2-Butanon, und Wasser lässt sich ein Lack bereiten, der zum Imprägnieren/Applizieren auf Polymer- und/oder Glasgewebeträger befähigt ist und mit dem sich nach Trocknung eine Schicht gewünschter, erfindungsgemäßer Leitfähigkeit, d.h. mit Quadratwiderständen im Bereich von R_{□}=1-10 kOhm über einen Temperaturbereich von 20-150°C, auf dem Polymer- und/oder Glasgewebeträger einstellen lässt.

Durch Verwenden eines Sulphoniumsupersäurederivats als Vernetzungsbeschleuniger ist dieses neuartige Glimmschutzband zum Härten von herkömmlichen Epoxidharz-Phthalsäureanhydrid-Mischungen als auch von neuartigen, also Anhydrid-freien Imprägniermitteln mit Epoxidharzen, insbesondere in Kombination mit cycloaliphatischen Epoxidharzen, tauglich. Derartige Sulphoniumsupersäurederivat(e), können Bisphenol-A-Diglycidylether, Bisphenol-F-Diglycidylether, Glycidylester, aliphatische und/oder cycloaliphatische Epoxidharze jeweils alleine, aber auch in beliebiger Kombination gelieren und aushärten. Erfolgreiche Tests wurden bereits mit Cycloaliphatischen Epoxidharzen in Mischung mit BADGE (Bisphenol-A-diglycidylether) durchgeführt.

Es hat sich auch überraschend gezeigt, dass im Sinne der Bandstabilität bzgl. der elektrischen Leitfähigkeit der Schicht ein formgebender Quervernetzer zusätzlich appliziert werden kann, das Band aber auch ohne formgebenden Quervernetzer ausreichende Stabilität zur Wicklung aufweist.

Das so über anschließende Heißlufttrocknung hergestellte Glimmschutzband zeigt bei erfindungsgemäßer Wärmeimprägnierung bei 70°C und anschließender Heißhärtung bei 140°C mit Anhydrid-freiem Epoxidharz bzw. einer vorteilhaften Mischung aus ca. 80 Gew.-% cycloaliphatischem Epoxidharz und ca. 20 Gew.-% destilliertem Bisphenol-A-Diglycidylether, nur geringfügiges, nachteiliges Quellverhalten, sodass der auf dem Glimmschutzband originär eingestellte Quadratwiderstand auch während und nach der Aushärtung mit flüssigem Epoxidharz, anhydridfreier Natur, am bevorzugtesten hauptsächlich, aber nicht ausschließlich cycloaliphatischer Struktur, erhalten bleibt und so die teilleitfähige Charakteristik bei Applikation des Glimmschutzbandes in einer elektrischen Maschine zum Abbau hoher elektrischer Feldstärken in Statorwicklungen konserviert wird.

Erfindungsgemäß wurden demnach zur Lackherstellung 20.0g 4-Acetyloxyphenyl-dimethylsulfonium-hexafluoroantimonat in 200.0g Ethylmethylketon gelöst. Diese klare, organische Lösung wurde bei Raumtemperatur unter Rühren langsam zu einer Suspension von 590.0g Iriotec 7320 (Fa. Merck KGaA, Darmstadt) und 108.7g Poval^{™} 25-98 R (Fa. Kuraray Europe GmbH, Hattersheim am Main) in 2400.0g destilliertem Wasser zugetropft und weitere 30min bei Raumtemperatur gerührt, z.B. per Dissolver mit Zahndispergierscheibe um durch Scherung im Nahbereich der Scheibe etwaige Agglomerate zu zerkleinern.

Diese türkis-schimmernde Lacksuspension wurde sodann auf 200mm breites Glas-/Polyester-Mischgewebe mit 44.7 g/m² Flächengewicht (Fa. Krempel GmbH, Vaihingen/Enz) mittels Tauchauftrag in einer Basecoater-Bandimprägnieranlage (Fa. COATEMA Coating Machinery GmbH, Dormagen) aufgebracht und bei etwa 120°C Band-Oberflächentemperatur im Heißluftgebläseofen vertikal unter einem Bandlauf von 0.8 Meter/Minute über eine Länge von 1,5m getrocknet. Es ergab sich als Resultat auf dem Band ein Trockengesamtauftrag von 27.48 g/m², mit 0.77 g/m² 4-Acetyloxyphenyl-dimethylsulfonium-hexafluoroantimonat als Beschleunigersubstanz, 22.56 g/m² Iriotec 7320 als teilleitfähigem Material für die Feldabsteuerung sowie 4.16 g/m² Poval^{™} 25-98 R als Bindemittel. In Summe hatte das Band also ein spezifisches Flächengesamtgewicht von ca. 72 g/m².

Das haptisch hervorragende, sehr gut wickelbare, klebfreie, geruchsarme, türkisfarbene, robuste und neuartige Glimmschutzband wies bei 20-23°C einen Quadratwiderstand R_{□}=6.5 kOhm auf, gemessen mittels 10cm²-Hochohm-Federzungenelektrode 3501FE nach DIN 53482 bzw. DIN EN 62631-3-2 (Fa. H.-P. Fischer Elektronik GmbH & Co., Mittenwalde).

Zur Untersuchung des kritischen Quellverhaltens des neuartigen Glimmschutzbandes während der VPI-Imprägnierung und während des Heißhärtens in erfindungsgemäßem, phthalsäureanhydridfreien Epoxidharz auf Basis von Mischungen aus cycloaliphatischen Epoxidharz und Glycidyletherepoxidharz, wurden zwei Glimmschutzbandstreifen der Abmessung 12 cm × 2.5 cm präpariert und die Enden je zu einem Centimeter Breite beidseitig mit handelsüblichem Silberleitlack versehen, sodass zwei elektrisch kontaktierbare Glimmschutzbandstreifen der Abmessung 10 cm × 2.5 cm erhalten wurden. Diese Steifen wurden am Silberleitlackkontakt mit hitzebeständigen Krokodilklemmen kontaktiert und an ein Multikanal-Präzessionsmessgerät Almemo^{®} 2890-9 (Fa. Ahlborn Mess- und Regelungstechnik GmbH, Holzkirchen) zur kontinuierlichen Widerstandsaufzeichnung angeschlossen.

Die Glimmbandstreifen wurden sodann mittig jeweils durch Gewichte unter Zug stehend, in einen Umluftofen überführt und vollständig für vier Stunden in ein 70°C heißes, phthalsäureanhydridfreies Epoxidharzgemisch, bestehend aus 80 Gew.-% cycloaliphatischem Epoxidharz des Typs 3,4-Epoxycyclohexylmethyl-3',4'-epoxycyclohexancarboxylat (Celloxide^{™} C2021P, Fa. Daicel Corporation, Tokyo; CAS-Nr. 2386-87-0) sowie 20 Gew.-% destilliertem Bisphenol-A-Diglycidylether (Epikote^{™} Resin 162, Fa. Hexion GmbH, Iserlohn; CAS-Nr. 1675-54-3), getaucht.

Nach dieser vierstündigen, die 70°C-VPI-Imprägnierphase nachstellenden Zeitspanne, wurden die elektrisch kontaktierten Glimmschutzbandstreifen aus dem Harz gehoben, thermisch zehn Stunden bei 145°C im Ofen heißgehärtet und im Anschluss auf Raumtemperatur abgekühlt. Während dieser Zeit wurde der elektrische Widerstand kontinuierlich aufgezeichnet. Durch Umrechnung des über die Zeit aufgezeichneten Widerstandes in den Quadratwiderstand (10 cm × 2.5 cm) wurde überraschend festgestellt, dass die ideale Widerstandscharakteristik des neuartigen Glimmschutzbandes im Bereich von 1-10 kOhm im vollen Temperaturbereich von 20-145-20°C beibehalten wird und somit zum Absteuern elektrischer Felder an Wicklungen in anhydridfreien, VPI-Epoxidharz-imprägnierten, elektrischen Maschinen und Generatoren bestens geeignet ist.

Zur Überprüfung der Beschleunigerauswaschung aus dem neuen Glimmschutzband wurde zudem ein sog. Harzinfizierungsversuch bzw. Beschleunigerverfügbarkeitstest vollzogen. Dazu wurden zwei Glimmschutzbandstreifen der Abmessungen 2.5 cm × 4.8 cm (12 cm²) präpariert und in jeweils 30g des o.g. (Alkyl)phthalsäureanhydridfreien Epoxidharzes (80 Gew.-% 3,4-Epoxycyclohexylmethyl-3',4'-epoxycyclohexancarboxylat / 20 Gew.-% destillierter Bisphenol-A-Diglycidylether) vier Stunden bei 70°C ausgelagert. Danach wurden die imprägnierten Glimmschutzbandstreifen aus dem Liquid entnommen und dieses verbliebene Epoxidharzgemisch weitere 20 Stunden bei 100°C gelagert. Nach Abkühlung auf 70°C wurde jeweils die dynamische Viskosität (η_{Probe1}, _{20h/100°C,} η_{Probe2}, _{20h/100°C}) bestimmt. Unter Abzug eines glimmschutzbandfreien Harzblindwertes (η_{BW}, _{20h/100°C}) ergaben sich folgende Werte bzw. Eigenschaften:
η_{BW}, _{20h/100°C} = 24.87 mPa·s
η_{Probe1}, _{20h/100°C} = 43.78 mPa·s
η_{Probe2}, _{20h/100°C} = 56.93 mPa·s
Erscheinungsbildp_{robe1&2}, _{20h/100°C} = Glimmbandstreifen sind steif, kein Tack
Beschleunigerverfügbarkeit_{Probe1}, _{20h/100°C} = 43.78 mPa·s - 24.87 mPa·s = 18.91 mPa·s
Beschleunigerverfügbarkeit_{Probe2}, _{20h/100°C} = 56.93 mPa·s - 24.87 mPa·s = 32.06 mPa·s

Weiter wurde die Reaktivität des neuartigen Glimmschutzbandes nach bis zu vier Wochen Raumtemperaturlagerung untersucht. Dazu wurden Stanzproben aus dem Glimmschutzband entnommen, mit anhydridfreiem Epoxidharz (80 Gew.-% 3,4-Epoxycyclohexylmethyl-3',4'-epoxycyclohexancarboxylat / 20 Gew.-% destillierter Bisphenol-A-Diglycidylether) in einem DSC-Tiegel benetzt und per dynamischer Differenzkalorimetrie (Fa. Netzsch-Gerätebau GmbH, Selb; DSC Phoenix F1) bei 10 K/min die Reaktionsenthalpie bestimmt (vgl. Abb. 5). Die Stabilität des neuartigen Glimmschutzbandes konnte anhand recht konstanter Reaktionsenthalpien (ca. 300-400 Joule pro Gramm Epoxidharzmischung) gezeigt werden.

Ausgehend von der neuen Generation an Isolationssystemen, die durch Imprägnieren mit Anhydrid-freien Imprägniermitteln herstellbar sind, wird durch die vorliegende Erfindung erstmals ein Glimmschutzband offenbart, in das ein gut geeigneter, rasch die Homopolymerisation initiierender Band-Beschleuniger deponierbar ist. Der Band-Beschleuniger liegt in Form eines Salzes einer Supersäure vor und ist in einem Glimmschutzband, das als Polymermatrix zumindest teilweise Polyvinylalkohol enthält, bis zu 6 Monate bei einer Temperatur von +6°C bis 23°C lagerstabil.

## Patentansprüche

1. Glimmschutzband für die Weiterverarbeitung zu einem Isolationssystem, eine imprägnierte Wicklung mit Potentialsteuerung durch Außenglimmschutz "AGS" und/oder Innenpotentialsteuerung "IPS" und/oder Endenglimmschutz "EGS" umfassend, das Isolationssystem durch Imprägnieren der Wicklung mit einem Anhydrid-freien und Harz-basierten Imprägniermittel bei 45 - 85°C und unter Vakuum herstellbar, wobei das Glimmschutzband zumindest ein Trägerband, einen elektrisch leitfähigen und/oder teilleitfähigen Füllstoff in einer Polymermatrix und zumindest einen Band-Beschleuniger, geeignet zur Härtung und/oder Gelierung des Imprägniermittels umfasst, **dadurch gekennzeichnet, dass** die Polymermatrix zumindest einen Polyvinylalkohol und/oder ein Polyvinylalkohol-Copolymerisat enthält und dass der zumindest eine Band-Beschleuniger ausgewählt ist aus der Gruppe der Supersäuren und/oder der Supersäurensalze, die zur Beschleunigung einer kationischen Homopolymerisation des Harz-basierten Anhydrid-freien Imprägniermittels geeignet ist.

2. Glimmschutzband nach Anspruch 1, bei dem die Basis des Harz-basierten Imprägniermittels ein anhydridfreies Epoxidharz ist.

3. Glimmschutzband nach einem der Ansprüche 1 oder 2, bei dem zumindest ein Ion eines Supersäurensalzes, das zumindest Teil des Band-Beschleunigers ist, ein Sulfonium-Kation ist.

4. Glimmschutzband nach einem der Ansprüche 1 oder 2, bei dem zumindest ein Ion eines Supersäurensalzes, das zumindest Teil des Band-Beschleunigers ist, ein Sulfonium-Kation mit einem Arylrest ist.

5. Glimmschutzband nach einem der vorhergehenden Ansprüche, bei dem mehrere Bandbeschleuniger in Kombination vorliegen.

6. Glimmschutzband nach einem der Ansprüche 3 oder 4, bei dem ein Sulfonium-Kation in Form eines Aryl-Alkyl-Sulfonium-Kations vorliegt.

7. Glimmschutzband nach einem der vorhergehenden Ansprüche, bei dem zumindest ein Di-Alkyl-Aryl-Sulfonium-Kation vorliegt.

8. Glimmschutzband nach einem der vorhergehenden Ansprüche, bei dem zumindest ein Di-Aryl-Alkyl-Sulfonium-Kation vorliegt.

9. Glimmschutzband nach einem der vorhergehenden Ansprüche 3 bis 8, bei dem ein Aryl-Rest eines Sulfonium-Kations substituiert vorliegt.

10. Glimmschutzband nach einem der vorhergehenden Ansprüche, bei dem ein Bandbeschleuniger mit einem Sulfonium-Kation mit einem Aryl-Rest, der einen Phenylrest umfasst, der Acetyloxyist, vorliegt.

11. Glimmschutzband nach einem der vorhergehenden Ansprüche, das als Bandbeschleuniger ein Supersäuren-Salz mit folgender chemischer Struktur umfasst:

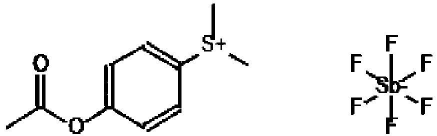

12. Glimmschutzband nach einem der vorhergehenden Ansprüche, wobei die Polymermatrix mehrere Polyvinylalkohole umfasst.

13. Glimmschutzband nach einem der vorhergehenden Ansprüche, wobei die Polymermatrix zumindest einen Polyvinylalkohol mit quervernetzten Anteilen umfasst.

14. Glimmschutzband nach einem der vorhergehenden Ansprüche, wobei der elektrisch leitfähige und/oder teilleitfähige Füllstoff zumindest eine Komponente, ausgewählt aus der Gruppe enthaltend Ruß, Graphit, Carbonnanotubes - CNTs-, Antimon dotiertes Zinnoxid, Siliziumkarbid und/oder Aluminium dotiertes Siliziumkarbid, die jeweilige Komponente dotiert oder undotiert, beschichtet oder unbeschichtet, dotiert beschichtet oder undotiert beschichtet vorliegend, umfassen kann.

15. Verwendung eines Glimmschutzbandes nach einem der vorhergehenden Ansprüche 1 bis 14 zur Herstellung eines Isolationssystems mit AGS, IPS und/oder EGS.

16. Elektrische rotierende Maschine mit einem Isolationssystem, das durch eine Verwendung nach Anspruch 15 erhältlich ist.
